(19) Europäisches Patentamt
European Patent Office
Office européen des brevets

(11) **EP 4 354 344 A1**

(12) **EUROPEAN PATENT APPLICATION**

(43) Date of publication:
**17.04.2024 Bulletin 2024/16**

(21) Application number: **22201404.5**

(22) Date of filing: **13.10.2022**

(51) International Patent Classification (IPC):
***G06N 3/045*** (2023.01)

(52) Cooperative Patent Classification (CPC):
**G06N 3/045; G06N 3/0499;** G01R 31/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
• **POLAND, Jan**
  **5415 Nussbaumen (CH)**

• **OTTEWILL, James Robert**
  **31-143 Kraków (PL)**
• **YUAN, Kai**
  **85591 Vaterstetten (DE)**
• **KUK, Edyta**
  **30-633 Kraków (PL)**

(74) Representative: **Vossius & Partner**
**Patentanwälte Rechtsanwälte mbB**
**Siebertstraße 3**
**81675 München (DE)**

(54) **ADAPTIVE FUNCTIONAL NEURAL LAYER AND NETWORK**

(57)    The present disclosure relates to a method of generating or updating a signal processing logic for processing signals, in particular time-series signals, that comprise measurements associated with a physical asset, the method comprising: training a machine learning, ML, model, in particular a functional neural network, FNN, wherein the ML model comprises performing: receiving the processing signals; determining a plurality of first-stage vectors based on the processing signals and a plurality of basis functions, in particular by projecting each of the processing signals to a respective basis function of a plurality of basis functions, wherein each of the plurality of first-stage vectors is related to the projected each of the processing signals through the respective basis function; and determining a plurality of second-stage vectors based on the plurality of first-stage vectors, in particular by projecting each of the plurality of first-stage vectors to a respective transformation matrix of a plurality of transformation matrices, wherein each of the plurality of second-stage vectors is related to the projected each of the plurality of first-stage vectors through the respective transformation matrix. The present disclosure further relates to a corresponding determining system and industrial or power system.

Fig. 1

**Description**

**Technical Field**

The present disclosure relates to a method, determining system, and an industrial or power system of generating or updating a signal processing logic for processing signals, in particular time-series signals, that comprise measurements associated with a physical asset.

**Background**

A Functional Neural Network, FNN, can be used for monitoring, diagnostics, and analytics and as a part of a logic for automatic decision making on industrial assets. This includes assets used in the electricity industry, such as power generation assets and their parts, power transmission assets and their parts, and power distribution assets and their parts. There can be different quantities of interest to monitor and/or estimate for an industrial asset, such as operational performance, operational state, or information on external conditions or adjacent systems. The information thus obtained can be used for informing human operators, managers, or stakeholders, to support their operational or other decisions, or to partly or fully automate the operation of the asset. While being operated, industrial assets typically generate measurement data in the form of numerical and/or categorical time series. Such time series can be recorded continuously at regular time intervals (periodic sampling), or at irregular time intervals. Measurements may also be triggered by certain events, e.g., time series may be recorded on detection of certain anomalies in the operating conditions.

Time series which are measured and sampled at regular or irregular time intervals constitute functional data: This data can be seen as a function over time. Analytics may be performed on the functional data with the functions, which may be considered as being comprised of an infinite number of samples, themselves being analyzed. The sampling is only a necessary technical property of the data, because infinite sampling is technically impossible.

While, at any time during the operation or lifetime of an asset, time series measurements from the asset may be available either for a limited time window covering the recent history or even for the entire operation history, some quantities of interest may not be directly measured, but they need to be derived from the data. In some cases, there may exist known physical laws that can be applied to calculate a quantity of interest from measured data, such as for determining the efficiency of an engine. In other cases, often prominently for the state of health of an asset, no such physical laws linking measured data to a quantity of interest are known. It is an active field of research to develop Machine Learning approaches for these cases. In particular, Artificial Neural Networks (ANN) are a promising candidate technology here.

Functional Data Analysis is an approach to process functional input data to statistical models. If functional input data is used in this way as an input to ANN, this is termed a Functional Neural Network (FNN). Functional Data Analysis processes the data in a way that is - as far as possible - sampling time agnostic. In particular, FNN can be applied to time series with irregular sampling and missing values.

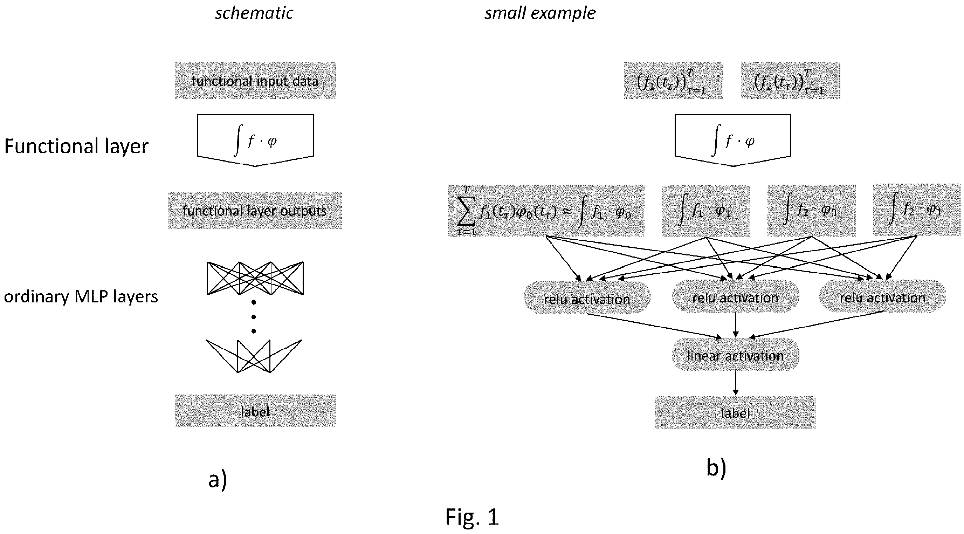

A conventional FNN is illustrated in Fig. 1 a). Only the first layer is a functional layer, taking functional input. It is annotated with $\int f \cdot \varphi$, which refers to the fact that the output of this layer is computed by projection $\int f_i(t) \cdot \varphi_j(t)\, dt$ of the functional input $f_i(t)$, for all input channels i, onto basis functions $\varphi_j(t)$, for all basis functions $j$. (It could be that different basis functions are chosen for each channel i, in which case the projections read $\int f_i(t) \cdot \varphi_{i,j}(t)\, dt$). The functional inputs are typically given at discrete sample times $(t_\tau)_{\tau=1}^n$. In this case, the projections may be approximated as

$$\int f_i(t) \cdot \varphi_j(t)dt \approx \sum_{\tau=1}^{T} f_i(t_\tau)\varphi_j(t) \qquad (1)$$

. The sum may be replaced by a weighted sum to account for irregular sampling intervals. For notational simplicity, this weight term is not shown here. Fig. 1 b) illustrates a small example. Here, two functional inputs are projected onto two basis functions, giving rise to a four-dimensional output of the functional layer. After the first functional layer of the FNN, further conventional Multilayer Perceptron (MLP) layers follow. They may be of any known or new kind: fully connected, convolutional, recurrent, etc. The example in Fig. 1 b) shows one hidden fully connected layer with Rectified Linear Unit (ReLU) activation and one fully connected output layer with linear activation.

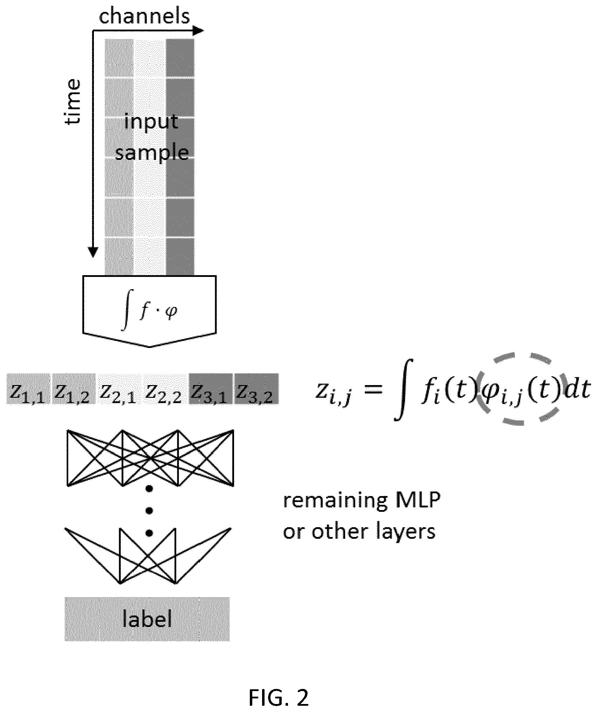

One design decision (in a Machine Learning context, such design decisions are often referred to as hyperparameter selection) when setting up an FNN is the choice of the basis functions used in the first functional layer. In doing so, a FNN architecture may be implemented with an adaptive basis layer. Fig. 2 illustrates a conventional FNN with adaptive basis layers (AdaFNN). Only the input layer is shown in detail and the remaining layers (e.g. fully connected MLP, convolutional, recurrent, etc.) are omitted for simplicity. The input is visualized in two dimensions: there are channels (3 in this example) and time steps (7 in this example). The time steps need not be regularly spaced, and the number of time steps per channel need not be the same. The basis functions $\varphi_{i,j}$ may but need not depend on the channel $i$. They are fixed or adaptive.

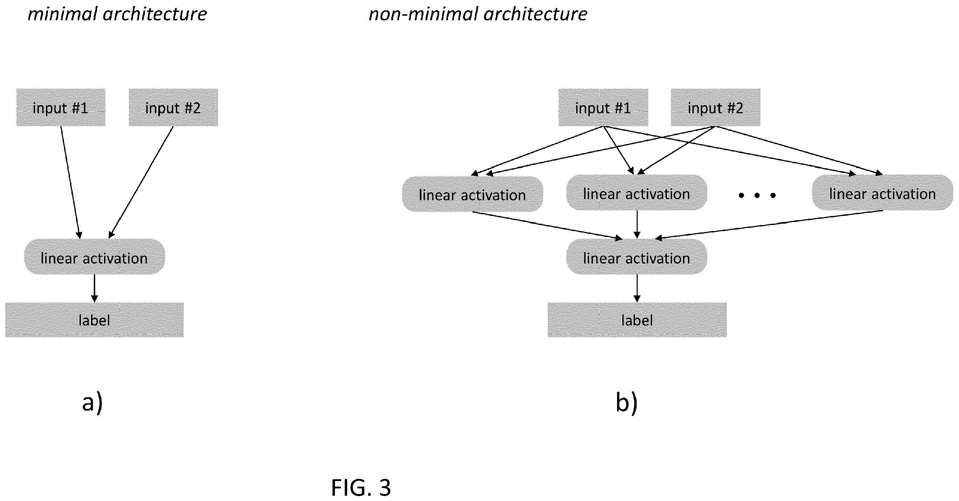

Implementing an adaptive basis layer means that the choice of the basis function is shifted. This means that it is taken out of the hyperparameter selection, where it causes additional effort to the modeler and thus gives rise to higher modeling costs and risks. It is taken into the usual training process, typically based on Stochastic Gradient Descent (SGD), leading to less effort, costs, and risks to the user performing the configuration of the network. When the SGD is applied to sufficiently wide network architectures, they will create hidden features that, depending on the task to be learned, with very high probability, cause the trainable ANN weight vector to be initialized very close to an optimum that can be quickly reached with state-of-the-art SGD. This can be demonstrated with the smallest possible example of learning a 2-dimensional linear regression with SGD, as illustrated in Fig. 3. Although any linear ANN will be functionally equivalent to a minimal ANN as shown in Fig. 3 a), a non-minimal architecture, as illustrated in Fig. 3 b), with an additional wide (e.g., 128 neurons) hidden linear layer will train much more efficiently with SGD. Training efficiency may be defined by three properties: Low number of training epochs to convergence, low amount of time for training, and high likelihood of a networks being trained to low generalization error when started from randomly initialized weights.

An alternative approach to conduct analytics and make predictions on the basis of time series data is recurrent models, such as Recurrent Neural Networks (RNN). In contrast to Functional Data Analysis, recurrent models rely on the sampling of the time series. Typically, the sampling is required to be regular in order to make the recurrent models perform well.

The conventional methods however, both FNN and RNN, offer poor trainability, particularly in the case where limited training data is available or no/limited labels are available for the training data. For the modelling of industrial assets, this case applies very often.

Thus, there is a need to improve the method, determining system, and an industrial or power system of generating or updating a signal processing logic for processing signals, in particular time-series signals, that comprise measurements associated with a physical asset.

## Summary

The present disclosure provides a building block to facilitate learning in particular for limited availability of data, i.e., low amount and / or low quality of training data and / or labels. This applies to any learning setup and architecture, regardless if all / few / no labels are available, if autoencoder and / or reward labels are used, and if the new adaptive functional layer is being used within a small or a large ANN. Moreover, the present disclosure advantageously offers the opportunity of increasing the width of the hidden elementary layers in the per-channel processing, to achieve favourable initialization. Simultaneously, the number of resulting projections, i.e., the width of the input to the remaining (MLP or other) layers, can be tightly controlled. This is important: If this width is too big, then the risk of overfitting strongly increases. In particular if limited training data is available and/or the subsequent layers are hard to train (for instance because they are recurrent layers), this may often be key to enable successful training.

The present disclosure relates to a method of generating or updating a signal processing logic for processing signals, in particular time-series signals, that comprise measurements associated with a physical asset, the method comprising: training a machine learning, ML, model, in particular a functional neural network, FNN, wherein the ML model comprises performing: receiving the processing signals; determining a plurality of first-stage vectors based on the processing signals and a plurality of basis functions, in particular by projecting each of the processing signals to a respective basis function of a plurality of basis functions, wherein each of the plurality of first-stage vectors is related to the projected each of the processing signals through the respective basis function; and determining a plurality of second-stage vectors based on the plurality of first-stage vectors, in particular by projecting each of the plurality of first-stage vectors to a respective transformation matrix of a plurality of transformation matrices, wherein each of the plurality of second-stage vectors is related to the projected each of the plurality of first-stage vectors through the respective transformation matrix.

In an embodiment, the method further comprises, in particular the ML model comprises performing: combining the second-stage vectors, in particular by concatenating the second-stage vectors into a concatenated vector; and/or determining at least one output of the FNN based on the plurality of second-stage vectors.

In an embodiment, the method further comprises providing the trained ML model as at least part of a signal processing logic to a device that executes the signal processing logic to control, monitor, and/or analyze the physical asset.

In an embodiment, the method further comprises: receiving the trained ML model; and executing the signal processing logic to control, monitor, and/or analyze the physical asset.

In an embodiment, each of the plurality of transformation matrices comprises a plurality of trainable weights.

In an embodiment, a dimensionality of at least one of transformation matrices is different from the dimensionalities of remaining transformation matrices such that a dimensionality of at least one of the plurality of second-stage vectors is different from the dimensionalities of the remaining second-stage vectors.

In an embodiment, the dimensionalities of the respective transformation matrices are determined based on at least one optimization method, in particular on integer decisions including grid search and hill climbing.

In an embodiment, the method further comprises determining information related to the health of the physical asset, based on the trained ML model, comprising a health indicator, a time series of health indicator evolution, a remaining useful life, RUL, a failure probability, a time series of failure probability evolution, a reliability, and/or a time series of reliabilities.

In an embodiment, determining the at least one output comprises processing the at least one second-stage intermediate value by a linear or nonlinear function that is subject to the plurality of trainable weights.

In an embodiment, the method further comprises: receiving sensor measurement data captured during operation of the physical asset; and updating the prognostic asset health state based on the received sensor measurement data.

In an embodiment, the physical asset is a power transformer, a distributed energy resource, DER, unit, or a power generator.

The present disclosure also relates to a method of generating or updating a signal processing logic for processing signals, in particular time-series signals, that comprise measurements associated with a physical asset, the method comprising providing the ML model, trained according to any one of the above-described embodiments, as at least part of a signal processing logic to a device that executes the signal processing logic to control, monitor, and/or analyze the physical asset.

The present disclosure further relates to a method of operating and/or maintaining an physical asset comprising: performing a prognostic physical asset health analysis for the physical asset using the method of any one of the above-described embodiments; and automatically performing at least one of the following: scheduling a down-time of the physical asset based on the determined prognostic physical asset health state; scheduling maintenance work based on the determined prognostic physical asset health state; scheduling replacement work based on the determined prognostic physical asset health state; changing maintenance intervals based on the determined prognostic physical asset health state.

The present disclosure further relates to a determining system operative to generate or update a signal processing logic for processing signals, in particular time-series signals, that comprise measurements associated with a physical asset, the determining system comprising a processor being configured to: receive the processing signals; and train a machine learning, ML, model, in particular a functional neural network, FNN, wherein the ML model comprises performing: determining a plurality of first-stage vectors based on the processing signals and a plurality of basis functions, in particular by projecting each of the processing signals to a respective basis function of a plurality of basis functions, wherein each of the plurality of first-stage vectors is related to the projected each of the processing signals through the respective basis function; and determining a plurality of second-stage vectors based on the plurality of first-stage vectors, in particular by projecting each of the plurality of first-stage vectors to a respective transformation matrix of a plurality of transformation matrices, wherein each of the plurality of second-stage vectors is related to the projected each of the plurality of first-stage vectors through the respective transformation matrix.

In an embodiment, the processor is configured to, in particular the ML model is configured to: combine the second-stage vectors, in particular by concatenating the second-stage vectors into a concatenated vector; and/or determine at least one output of the FNN based on the plurality of second-stage vectors.

In an embodiment, the processor is configured to provide the trained ML model as at least part of a signal processing logic to a device that executes the signal processing logic to control, monitor, and/or analyze the physical asset.

In an embodiment, the processor is configured to: receive the trained ML model; and execute the signal processing logic to control, monitor, and/or analyze the physical asset.

In an embodiment, each of the plurality of transformation matrices comprises a plurality of trainable weights.

In an embodiment, a dimensionality of at least one of transformation matrices is different from the dimensionalities of remaining transformation matrices such that a dimensionality of at least one of the plurality of second-stage vectors is different from the dimensionalities of the remaining second-stage vectors.

In an embodiment, the dimensionalities of the respective transformation matrices are determined based on at least one optimization method, in particular on integer decisions including grid search and hill climbing.

In an embodiment, the processor is configured to determine information related to the health of the physical asset, based on the trained ML model, comprising a health indicator, a time series of health indicator evolution, a remaining useful life, RUL, a failure probability, a time series of failure probability evolution, a reliability, and/or a time series of reliabilities.

In an embodiment, determining the at least one output comprises processing the at least one second-stage intermediate value by a linear or nonlinear function that is subject to the plurality of trainable weights.

In an embodiment, the processor is configured to: receive sensor measurement data captured during operation of the physical asset; and update the prognostic asset health state based on the received sensor measurement data.

In an embodiment, the physical asset is a power transformer, a distributed energy resource, DER, unit, or a power generator.

The present disclosure further relates to an industrial or power system, comprising: a physical asset; and the determining system according to any one of the above-described embodiments, optionally wherein the determining system is a decentralized controller of the industrial or power system for controlling the asset.

The method according to any one of the embodiments disclosed herein may advantageously monitor and/or estimate quantities for an industrial asset, such as operational performance, operational state, or information on external conditions or adjacent systems. One particular quantity to monitor and/or estimate is the state of health of an industrial asset, which allows the degradation of the asset to be understood, its remaining useful life (RUL) to be predicted, and decisions for operation, maintenance, and repair to be derived. The information thus obtained can be used for informing human operators, managers, or stakeholders, to support their operational or other decisions, or to partly or fully automate the operation of the asset.

Various exemplary embodiments of the present disclosure are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

In the following, exemplary embodiments of the present disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The above and other aspects and their implementations are described in greater detail in the drawings, the descriptions, and the claims.

**Brief Description of the Drawings**

Fig. 1 a) and b) illustrate a functional neural network architecture.

Fig. 2 illustrates a functional neural network architecture.

Fig. 3 a) and b) illustrate minimal and non-minimal architectures.

Fig. 4 illustrates a flowchart of a method according to an embodiment of the present disclosure.

Fig. 5 illustrates a functional neural network architecture according to an embodiment of the present disclosure.

Fig. 6 illustrates a generalized structure of the functional neural network architecture according to an embodiment of the present disclosure.

Fig. 7 a) and b) illustrate a performance comparison among functional neural network architectures including the functional neural network architecture according to an embodiment of the present disclosure.

Fig. 8 a) and b) illustrate a performance comparison among functional neural network architectures including the functional neural network architecture according to an embodiment of the present disclosure.

Fig. 9 a) and b) illustrate a device and a system according to an embodiment of the present disclosure.

**Detailed Description of the Disclosure**

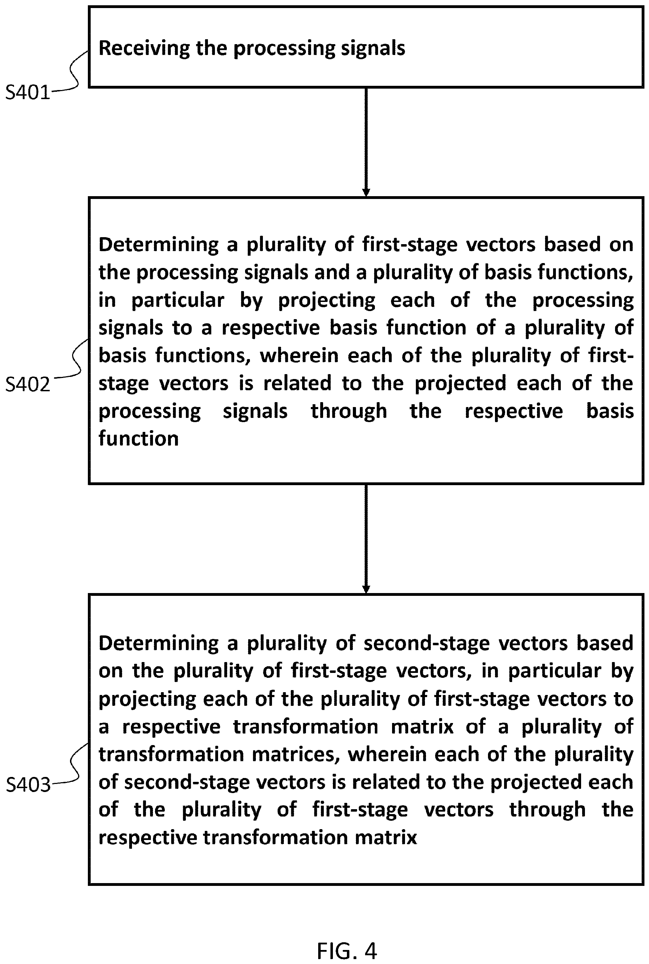

Fig. 4 illustrates a flowchart of a method according to an embodiment of the present disclosure. In particular, the method according to an embodiment of the present disclosure comprises training a machine learning, ML, model, in particular a functional neural network, FNN, and Fig. 4 illustrates the methods performed by the ML model. At S401, the processing signals are received. The processing signals may be time-series signals, that comprise measurements associated with at least one physical asset. The processing signals may be optionally preprocessed before being received, in particular by the ML model, (e.g. by scaling, data cleaning, etc.). At S402, a plurality of first-stage vectors is determined based on the processing signals and a plurality of basis functions, in particular by projecting each of the processing signals to a respective basis function of a plurality of basis functions, wherein each of the plurality of first-stage vectors is related to the projected each of the processing signals through the respective basis function. At S403, a plurality of second-stage vectors is determined based on the plurality of first-stage vectors, in particular by projecting each of the plurality of first-stage vectors to a respective transformation matrix of a plurality of transformation matrices, wherein each of the plurality of second-stage vectors is related to the projected each of the plurality of first-stage vectors through the respective transformation matrix.

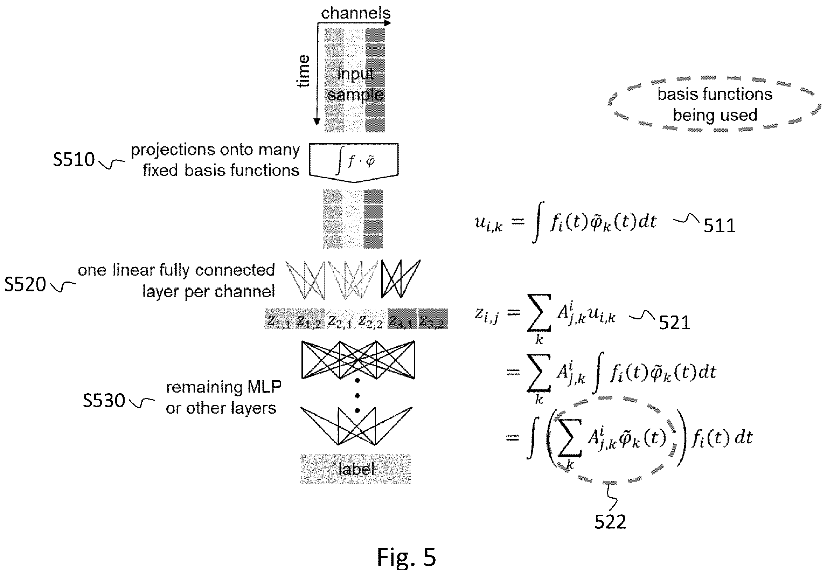

Fig. 5 illustrates a functional neural network architecture according to an embodiment of the present disclosure. The functional neural network of the present disclosure is hereinafter referred to as an Adaptive-Equivalent FNN (AEFNN) layer. The basic linear AEFNN architecture is shown in Fig. 5 and comprises performing:

- Projecting (S510) the channels on many fixed basis functions $\tilde{\varphi}_k$. There are no trainable weights involved in this step, hence it may be done outside the SGD training. That is, fixed basis functions $\tilde{\varphi}_k$ are not trainable.
- Optionally, normalizing the output of the first projection $u_{i,k}$ 511 for the inputs to ANN (e.g. centered and scaled to unit standard deviation). Subsequently there is, per channel i, one trainable regular ANN layer with linear activation. These trainable layers act in parallel on the channels.
- Projecting (S520) the (optionally normalized) output of the first projection $u_{i,k}$ 511 to the corresponding weights $A^i_{j,k}$ of the weight matrices $A^i$, wherein the weight matrices $A^i$ are trainable for each data channel i.
- Summing the results of the second projection S520 over k to determine the output of the second projection $z_{i,j}$ 521.
- Optionally, arranging (S530) the output of the second projection $z_{i,j}$ 521 depending on how they are subsequently used. E.g. if the Adaptive-Equivalent FNN layer is followed by more ANN layers, its outputs may be concatenated, reshaped, stacked, etc.

The output of the second projection $z_{i,j}$ are projections of the functional inputs $f_i(t)$ onto basis functions which are linear combinations of the fixed basis functions $\tilde{\varphi}_k$. Since the weight matrices $A^i$ are trainable for each data channel i, the linear combinations of the fixed basis functions $\tilde{\varphi}_k$ behave as an adaptive basis functions $\varphi_{i,j}$ of Fig. 2. This relationship is illustrated in the mathematical derivation, the basis functions being effectively used are circled 522.

The input sample may be referred to the processing signals. The output of the first projection $u_{i,k}$ may be referred to a plurality of first-stage vectors. The output of the second projection $z_{i,j}$ may be referred to a plurality of second-stage vectors. The matrices $A^i$ may be referred to a transformation matrix.

In an embodiment, the method further comprises, in particular the ML model comprises performing: combining the second-stage vectors, in particular by concatenating the second-stage vectors into a concatenated vector; and/or determining at least one output of the FNN based on the plurality of second-stage vectors.

In an embodiment, the method further comprises providing the trained ML model as at least part of a signal processing logic to a device that executes the signal processing logic to control, monitor, and/or analyze the physical asset.

In an embodiment, the method further comprises: receiving the trained ML model; and executing the signal processing logic to control, monitor, and/or analyze the physical asset.

In an embodiment, each of the plurality of transformation matrices comprises a plurality of trainable weights.

In an embodiment, a dimensionality of at least one of transformation matrices is different from the dimensionalities of remaining transformation matrices such that a dimensionality of at least one of the plurality of second-stage vectors is different from the dimensionalities of the remaining second-stage vectors.

In an embodiment, the dimensionalities of the respective transformation matrices are determined based on at least one optimization method, in particular on integer decisions including grid search and hill climbing.

In an embodiment, the method further comprises determining information related to the health of the physical asset, based on the trained ML model, comprising a health indicator, a time series of health indicator evolution, a remaining useful life, RUL, a failure probability, a time series of failure probability evolution, a reliability, and/or a time series of reliabilities.

In an embodiment, determining the at least one output comprises processing the at least one second-stage intermediate value by a linear or nonlinear function that is subject to the plurality of trainable weights.

In an embodiment, the method further comprises: receiving sensor measurement data captured during operation of the physical asset; and updating the prognostic asset health state based on the received sensor measurement data.

In an embodiment, the physical asset is a power transformer, a distributed energy resource, DER, unit, or a power generator.

In an embodiment, the method further comprises providing the ML model, trained according to any one of the above-described embodiments, as at least part of a signal processing logic to a device that executes the signal processing logic to control, monitor, and/or analyze the physical asset.

In an embodiment, the method further comprises: performing a prognostic physical asset health analysis for the physical asset using the method of any one of the above-described embodiments; and automatically performing at least one of the following: scheduling a down-time of the physical asset based on the determined prognostic physical asset health state; scheduling maintenance work based on the determined prognostic physical asset health state; scheduling replacement work based on the determined prognostic physical asset health state; changing maintenance intervals based on the determined prognostic physical asset health state.

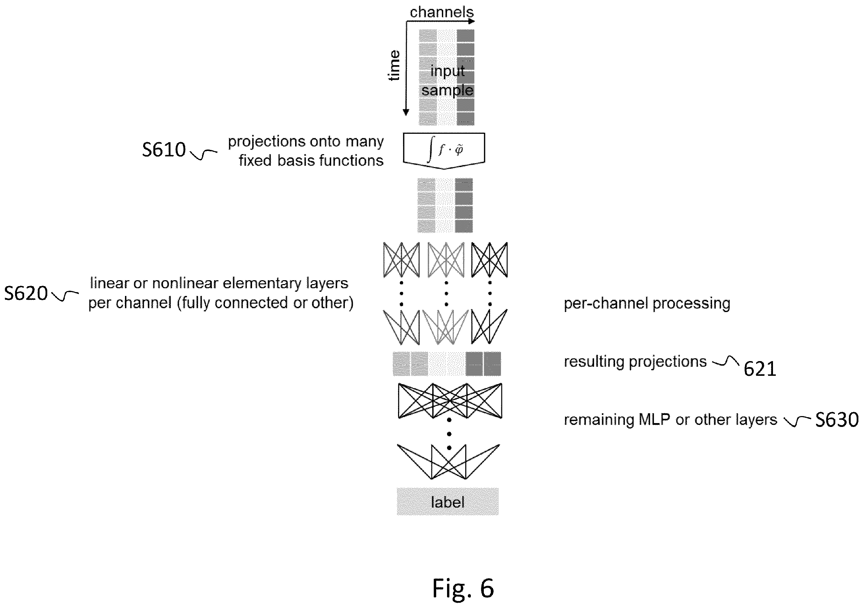

The fully general design of the Adaptive-Equivalent FNN layer is shown in Fig. 6. The only difference to the linear layer described in Fig. 5 is the generalization of the per channel layers, which may be nonlinear and may comprise multiple elementary layers. Hence, comprises performing:

- Projecting (S610) the channels on many fixed basis functions $\tilde{\varphi}_k$. There are no trainable weights involved in this step, hence it may be done outside the SGD training. That is, fixed basis functions $\tilde{\varphi}_k$ are not trainable.
- Optionally, normalizing the output of the first projection $u_{i,k}$ for the inputs to ANN (e.g. centered and scaled to unit standard deviation). Subsequently there are, per channel $i$, one or multiple trainable regular ANN layers (fully connected or other) with linear or nonlinear activation. These trainable layers act in parallel on the channels.
- Projecting (S620) the (optionally normalized) output of the first projection $u_{i,k}$ to the corresponding weights $A^i_{j,k}$ of the weight matrices $A^i$ of the first trainable regular ANN layer of the N trainable regular ANN layers, wherein the weight matrices $A^i$ are trainable for each data channel $i$. When, N is larger than one, projecting the output of preceding projection subsequently, i.e., the results of the projection $u_{i,k}$ to the weight matrices $A^i$ of the first trainable regular ANN layer is projected onto the weight matrices $A^i$ of the second trainable regular ANN layer, and so forth.
- Summing the results of the second projection S620 over $k$ to determine the output of the second projection $z_{i,j}$ 621.
- Optionally, arranging (S630) the output of the second projection $z_{i,j}$ 621 depending on how they are subsequently used. E.g. if the Adaptive-Equivalent FNN layer is followed by more ANN layers, its outputs may be concatenated, reshaped, stacked, etc.

Note that, as described in the above steps, the term Adaptive-Equivalent FNN layer refers to a construction which may technically be a sequence of multiple non-trainable and trainable layers and other matrix manipulation operations (concatenating, reshaping, stacking, etc.).

The Adaptive-Equivalent FNN layer is usually just one part of the whole ANN. For instance, in Figures 3 and 4, after the Adaptive-Equivalent layer, there is a remaining MLP network S530 S630. In general, the Adaptive-Equivalent FNN layer is typically the first layer of an ANN, followed by arbitrary further ANN layers.

In an embodiment, functional layers, including at least one Adaptive-Equivalent functional layer, is stacked, in particular by performing: applying a functional layer to the functional input data; Interpreting the numerical output vectors from the functional layer as functional data (e.g. sampled function evaluations), possibly after rearranging the vectors (reshaping, transposing, etc.); and applying a second functional layer to the data resulting from the previous operation.

In an embodiment, the processing signals comprises at least two variables. In an embodiment, the basis functions are chosen for respective variables of the at least two variables. In an embodiment, the processing signals are projected to the respective basis functions chosen for the respective variables of the at least two variables.

In an embodiment, the ML is or is part of a trainable Neural Network system which, after training, is used to process data from industrial assets according to any one of the above-described embodiments. In an embodiment, the data processing is performed offline or online, wherein the term "online" means that the trained Neural Network system is continuously or at regular or irregular time intervals evaluated on new data recorded from the asset(s).

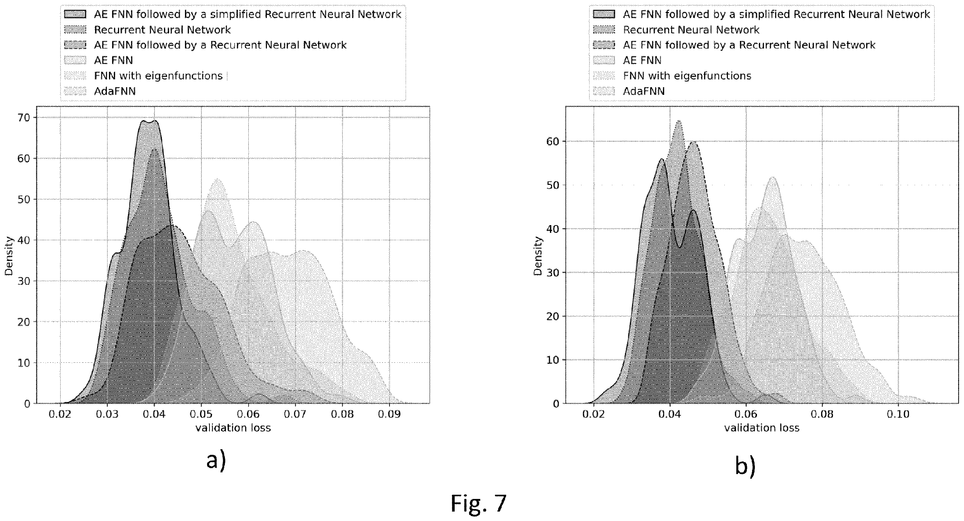

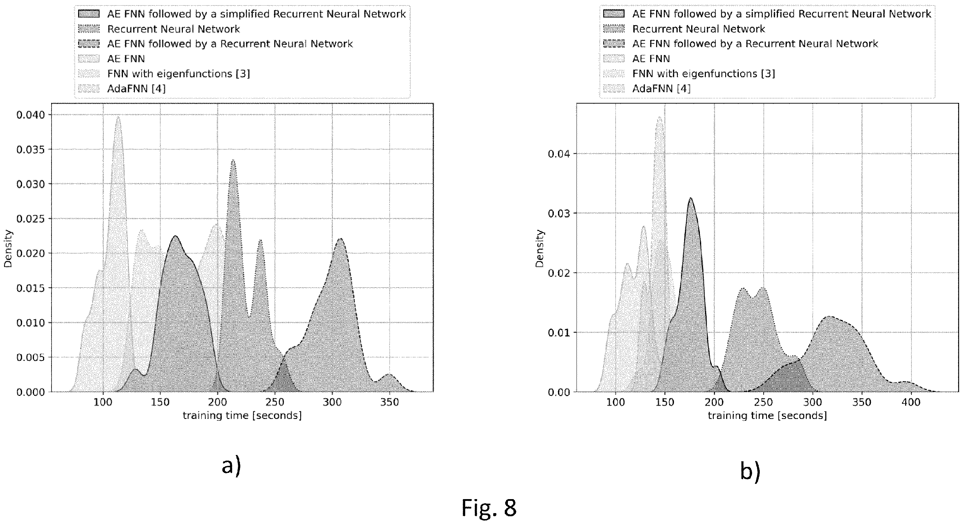

Fig. 7 and Fig. 8 illustrate the performance on a simple RUL prediction task on the NASA Turbofan Data Set. Specifically, an ANN is setup and trained for predicting RUL labels on the first data set FD001. The training dataset is randomly partitioned into 80% training and 20% validation data, and the training is repeated multiple times, in order to obtain statistical distributions of the validation loss and the training time. Two different sets of input channels are used: (a) all available input channels in the data set, and (b) 6 input channels which have been preselected according to their significance to predict RUL.

6 architectures are compared. 3 of them learn to predict RUL based on the data taken from a fixed sliding window of length 21 samples, and 3 combine the sliding window input with past information by means of a Recurrent Neural Network (RNN) architecture. For the RNN, we use a Gated Recurrent Unit (GRU) network. We also compare a simplified RNN which processes the temporal information with two parallel processing streams composed of a temporal convolutional network and a simple cumulative sum.

Fig. 7 compares the validation loss of the different architectures for the RUL prediction task, for both sets of input channels. In particular, Fig. 7 a) illustrates the results when all input channels are used and Fig. 7 b) with 6 selected input channels. It can be seen that with a recurrent architecture, the network performs better than without. Comparing the AE FNN architecture without reference directly to the FNN with eigenfunctions dedicated to this task, it is observed that the performance is similar, hence the AE FNN successfully learns to predict RUL well without dedicated eigenfunctions. In contrast, the performance of AdaFNN is less robust. In comparison with a RNN (GRU network), AE FNN is able to compete.

Training times of the different architectures are compared in Fig. 8. In particular, Fig. 8 a) illustrates the results when all input channels are used and Fig. 8 b) with 6 selected input channels. It can be seen that the AEFNN without recurrence trains fastest, even faster than the FNN with dedicated eigenfunctions. Also in combination with RNN, one AE FNN variant is fastest. This demonstrates that the AE FNN layer is a strong architectural choice for with possibly favorable scaling properties for functional input data.

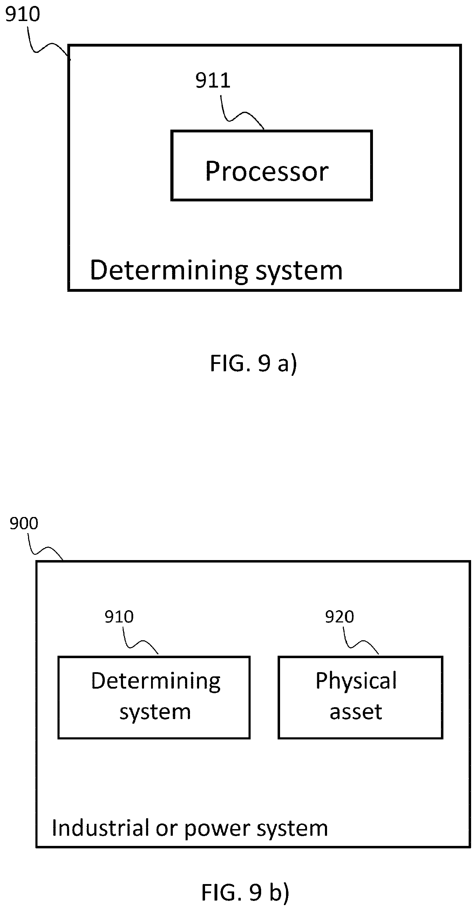

Fig. 9 a) illustrates a determining system 910 operative to generate or update a signal processing logic for processing signals, in particular time-series signals, that comprise measurements associated with a physical asset 920, the determining system 910 comprising a processor 911 being configured to: receive the processing signals; and train a machine learning, ML, model, in particular a functional neural network, FNN, wherein the ML model comprises performing: determining a plurality of first-stage vectors based on the processing signals and a plurality of basis functions, in particular by projecting each of the processing signals to a respective basis function of a plurality of basis functions, wherein each of the plurality of first-stage vectors is related to the projected each of the processing signals through the respective basis function; and determining a plurality of second-stage vectors based on the plurality of first-stage vectors, in particular by projecting each of the plurality of first-stage vectors to a respective transformation matrix of a plurality of transformation matrices, wherein each of the plurality of second-stage vectors is related to the projected each of the plurality of first-stage vectors through the respective transformation matrix.

In an embodiment, the processor is configured to transmit/provide/transfer the received processing signals to the ML model. In an embodiment, the ML model comprises performing receiving the processing signals, in particular from the processor.

In an embodiment, the processor is configured to execute a method according to any one of the above-described embodiments.

Fig. 9 b) illustrates an industrial or power system 900, comprising: a physical asset 920; and the determining system 910 according to any one of the above-described embodiments, optionally wherein the determining system 910 is a decentralized controller of the industrial or power system 900 for controlling the asset.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1.  A method of generating or updating a signal processing logic for processing signals, in particular time-series signals, that comprise measurements associated with a physical asset, the method comprising:
    training a machine learning, ML, model, in particular a functional neural network, FNN, wherein the ML model comprises performing:

    receiving the processing signals;
    determining a plurality of first-stage vectors based on the processing signals and a plurality of basis functions, in particular by projecting each of the processing signals to a respective basis function of a plurality of basis functions,
    wherein each of the plurality of first-stage vectors is related to the projected each of the processing signals through the respective basis function; and

determining a plurality of second-stage vectors based on the plurality of first-stage vectors, in particular by projecting each of the plurality of first-stage vectors to a respective transformation matrix of a plurality of transformation matrices,

wherein each of the plurality of second-stage vectors is related to the projected each of the plurality of first-stage vectors through the respective transformation matrix.

2. The method of claim 1, further comprising:

combining the second-stage vectors, in particular by concatenating the second-stage vectors into a concatenated vector; and/or
determining at least one output of the FNN based on the plurality of second-stage vectors.

3. The method of claim 1 or 2, providing the trained ML model as at least part of a signal processing logic to a device that executes the signal processing logic to control, monitor, and/or analyze the physical asset.

4. The method of claim 3, further comprising:

receiving the trained ML model; and
executing the signal processing logic to control, monitor, and/or analyze the physical asset.

5. The method of any one of claims 1 to 4, wherein each of the plurality of transformation matrices comprises a plurality of trainable weights.

6. The method of any one of claims 1 to 5, wherein a dimensionality of at least one of transformation matrices is different from the dimensionalities of remaining transformation matrices such that a dimensionality of at least one of the plurality of second-stage vectors is different from the dimensionalities of the remaining second-stage vectors.

7. The method of any one of claims 1 to 6, wherein the dimensionalities of the respective transformation matrices are determined based on at least one optimization method, in particular on integer decisions including grid search and hill climbing.

8. The method of any one of claims 1 to 7, comprising determining information related to the health of the physical asset, based on the trained ML model, comprising a health indicator, a time series of health indicator evolution, a remaining useful life, RUL, a failure probability, a time series of failure probability evolution, a reliability, and/or a time series of reliabilities.

9. The method of any one of claims 1 to 8, wherein determining the at least one output comprises processing the at least one second-stage intermediate value by a linear or nonlinear function that is subject to the plurality of trainable weights.

10. The method of any one of claims 1 to 9, further comprising:

receiving sensor measurement data captured during operation of the physical asset; and
updating the prognostic asset health state based on the received sensor measurement data.

11. The method of any one of claims 1 to 10, wherein the physical asset is a power transformer, a distributed energy resource, DER, unit, or a power generator.

12. A method of generating or updating a signal processing logic for processing signals, in particular time-series signals, that comprise measurements associated with a physical asset, the method comprising providing the ML model, trained according to any one of the proceeding claims, as at least part of a signal processing logic to a device that executes the signal processing logic to control, monitor, and/or analyze the physical asset.

13. A method of operating and/or maintaining an physical asset comprising:

performing a prognostic physical asset health analysis for the physical asset using the method of any one of the preceding claims; and
automatically performing at least one of the following: scheduling a down-time of the physical asset based on the determined prognostic physical asset health state; scheduling maintenance work based on the determined prognostic physical asset health state; scheduling replacement work based on the determined prognostic physical asset health state; changing maintenance intervals based on the determined prognostic physical asset health state.

14. A determining system operative to generate or update a signal processing logic for processing signals, in particular time-series signals, that comprise measurements associated with a physical asset, the determining system comprising a processor being configured to:

receive the processing signals; and
train a machine learning, ML, model, in particular a functional neural network, FNN, wherein the ML model comprises performing:

determining a plurality of first-stage vectors based on the processing signals and a plurality of basis functions, in particular by projecting each of the processing signals to a respective basis function of a plurality of basis functions,
wherein each of the plurality of first-stage vectors is related to the projected each of the processing signals through the respective basis function; and
determining a plurality of second-stage vectors based on the plurality of first-stage vectors, in particular by projecting each of the plurality of first-stage vectors to a respective transformation matrix of a plurality of transformation matrices,
wherein each of the plurality of second-stage vectors is related to the projected each of the plurality of first-stage vectors through the respective transformation matrix.

15. An industrial or power system, comprising:
a physical asset; and
the determining system of claim 14, optionally wherein the determining system is a decentralized controller of the industrial or power system for controlling the asset.

*schematic*  *small example*

Functional layer

ordinary MLP layers

a)

b)

Fig. 1

EP 4 354 344 A1

$$z_{i,j} = \int f_i(t)\varphi_{i,j}(t)dt$$

FIG. 2

*non-minimal architecture*

*minimal architecture*

input #1 input #2

input #1 input #2

linear activation

linear activation

linear activation

linear activation

linear activation

label

label

a)

b)

FIG. 3

Receiving the processing signals

S401

Determining a plurality of first-stage vectors based on the processing signals and a plurality of basis functions, in particular by projecting each of the processing signals to a respective basis function of a plurality of basis functions, wherein each of the plurality of first-stage vectors is related to the projected each of the processing signals through the respective basis function

S402

Determining a plurality of second-stage vectors based on the plurality of first-stage vectors, in particular by projecting each of the plurality of first-stage vectors to a respective transformation matrix of a plurality of transformation matrices, wherein each of the plurality of second-stage vectors is related to the projected each of the plurality of first-stage vectors through the respective transformation matrix

S403

FIG. 4

EP 4 354 344 A1

channels

time

input sample

basis functions being used

S510  projections onto many fixed basis functions  $\int f \cdot \tilde{\varphi}$

$u_{i,k} = \int f_i(t)\tilde{\varphi}_k(t)dt$  511

S520  one linear fully connected layer per channel

$z_{1,1}\ z_{1,2}\ z_{2,1}\ z_{2,2}\ z_{3,1}\ z_{3,2}$

$z_{i,j} = \sum_k A^i_{j,k} u_{i,k}$  521

$= \sum_k A^i_{j,k} \int f_i(t)\tilde{\varphi}_k(t)dt$

S530  remaining MLP or other layers

$= \int \left( \sum_k A^i_{j,k} \tilde{\varphi}_k(t) \right) f_i(t)\, dt$

label

522

Fig. 5

S610 — projections onto many fixed basis functions

$\int f \cdot \tilde{\varphi}$

channels

time

input sample

S620 — linear or nonlinear elementary layers per channel (fully connected or other)

per-channel processing

resulting projections — 621

remaining MLP or other layers — S630

label

Fig. 6

Fig. 7

a)

b)

Fig. 8

EP 4 354 344 A1

910

911

Processor

Determining system

FIG. 9 a)

900

910

920

Determining
system

Physical
asset

Industrial or power system

FIG. 9 b)

Europäisches
Patentamt

European
Patent Office

Office européen
des brevets

# EUROPEAN SEARCH REPORT

**Application Number**

EP 22 20 1404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNWEN YAO ET AL: "Deep Learning for Functional Data Analysis with Adaptive Basis Layers", ARXIV.ORG, CORNELL UNIVERSITY LIBRARY, 201 OLIN LIBRARY CORNELL UNIVERSITY ITHACA, NY 14853, 19 June 2021 (2021-06-19), XP081992256, | 1-7,9, 12,14 | INV. G06N3/045 |
| Y | * Section 5.2; page seventh – page eighth; figures 1,2 * * Equation (2); page third; figure 1 * ----- | 8,10,11, 13,15 | |
| Y | LE XIE ET AL: "Massively Digitized Power Grid: Opportunities and Challenges of Use-inspired AI", ARXIV.ORG, CORNELL UNIVERSITY LIBRARY, 201 OLIN LIBRARY CORNELL UNIVERSITY ITHACA, NY 14853, 10 May 2022 (2022-05-10), XP091224380, * Section III.A; page 6 * * figure 15 * ----- | 8,10,11, 13 | |
| Y | US 2021/382473 A1 (STANO PAWEL [PL] ET AL) 9 December 2021 (2021-12-09) * page 5, paragraph 0139 – paragraph 0142 * ----- | 15 | |
| A | ANIRUDDHA RAJENDRA RAO ET AL: "Non-linear Functional Modeling using Neural Networks", ARXIV.ORG, CORNELL UNIVERSITY LIBRARY, 201 OLIN LIBRARY CORNELL UNIVERSITY ITHACA, NY 14853, 19 April 2021 (2021-04-19), XP081941042, * figures 1,2 * ----- | 1-15 | |

**TECHNICAL FIELDS SEARCHED (IPC)**

G06N
G01R

The present search report has been drawn up for all claims

| Place of search | Date of completion of the search | Examiner |
|---|---|---|
| The Hague | 31 March 2023 | Fonseca dos Santos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 1404

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2023

| Patent document cited in search report | | Publication date | Patent family member(s) | | Publication date |
|---|---|---|---|---|---|
| US 2021382473 | A1 | 09-12-2021 | CN 114091798 | A | 25-02-2022 |
| | | | EP 3923101 | A1 | 15-12-2021 |
| | | | JP 2021193557 | A | 23-12-2021 |
| | | | US 2021382473 | A1 | 09-12-2021 |

EPO FORM P0459

For more details about this annex : see Official Journal of the European Patent Office, No. 12/82